# FASCICULE DE BREVET EUROPEEN

(11) **EP 1 990 658 B1**
(45) Date de publication et mention de la délivrance du brevet: **18.11.2009**
(21) Numéro de dépôt: 08155308.3
(22) Date de dépôt: 28.04.2008
(51) Int. Cl.: G01V 3/15

(54) **Detecteur de metaux portatif et sans fil**
Tragbarer, schnurloser Metalldetektor
Cordless portable metal detector

(30) Priorité: 11.05.2007 FR 0755006
(43) Date de publication de la demande: 12.11.2008
(73) Titulaire: Loubet, Alain, 31320 Mervilla (FR)
(72) Inventeur: Loubet, Alain, 31320 Mervilla (FR)
(74) Mandataire: Lucas, Laurent Jacques

(56) Documents cités:
- DE-C1- 19 652 977
- US-A- 5 696 490
- US-B1- 7 081 754

## Description

La présente invention concerne le domaine général de la détection de métaux au moyen de détecteurs électromagnétiques. Elle concerne plus particulièrement les appareils portatifs fonctionnant à basses fréquences, communément utilisés pour la recherche et la discrimination d'objets métalliques enterrés ou masqués par la végétation couvrant le sol. De tels détecteurs sont utilisés essentiellement pour le loisir, la recherche de monnaies, bijoux, trésors, mais aussi par les professionnels pour le déminage, les recherches en balistique, ou encore la recherche de tuyauteries ou de particules métalliques polluantes dans l'industrie et le secteur alimentaire.

Les détecteurs de métaux les plus communément utilisés, notamment pour le loisir, utilisent le principe maintenant bien connu de la mesure de phase entre un signal électromagnétique alternatif émis par une bobine alimentée par une tension électrique, et le signal reçu par une autre bobine proche de la première. Dans ce type d'appareil, les deux bobines sont couplées de telle manière que le signal reçu par la bobine réceptrice soit nul lorsque aucun élément métallique n'est placé dans le champ de la bobine émettrice. La fréquence du signal émis par la bobine émettrice est généralement inférieure à 100khz.

Ces détecteurs sont habituellement composés de 3 parties:
- une tête de détection,
- une canne support, qui peut être ou non télescopique,
- un boîtier électronique de commande.

Très généralement, le détecteur comporte également un casque écouteur audio qui permet au boîtier électronique de transmettre un signal audible à l'opérateur lorsqu'un objet métallique est détecté.

Dans ce type d'équipement la tête de détection se présente généralement sous la forme d'un disque qui contient essentiellement les bobines de détection. Par suite, le signal d'excitation transmis à la bobine émettrice ainsi que le signal reçu par la bobine réceptrice sont véhiculés par un câble électrique entre la tête de détection et le boîtier de commande.

La tête de détection est généralement fixée de manière amovible à une canne support télescopique, qui comporte une poignée de maintien à l'usage de l'opérateur qui peut ainsi progresser en déplaçant la tête de détection au-dessus du sol.

Généralement, le boîtier de commande contient la majeure partie des circuits électroniques permettant de générer le signal d'excitation et d'effectuer la réception et le traitement du signal détecté par la bobine réceptrice, l'analyse du signal reçu permettant de déterminer la nature des métaux correspondants. Il contient également les batteries nécessaires au fonctionnement de l'ensemble.

Selon le produit considéré, le boîtier de commande peut être positionné sur la canne support, face à l'utilisateur, de façon à lui permettre d'accéder à ce boîtier avec la main non mobilisée par le maintien de l'équipement. Le boîtier de commande comporte en outre, le plus souvent, un haut-parleur et une sortie audio permettant de connecter un casque écouteur.

Dans le but de diminuer le poids porté par la canne support et d'augmenter la maniabilité de la tête de détection, certains équipements proposent une sacoche de transport dans laquelle le boîtier de commande peut être logé et transporté en bandoulière par l'opérateur. De la sorte, la canne support se trouve avantageusement plus légère et plus maniable. En revanche, la liaison nécessaire du boîtier avec la tête de détection oblige à mettre en place un câble électrique de liaison de plus grande longueur, destiné alors à pendre sur le côté de l'opérateur et qui risque d'être accroché par la végétation dans le cas où la recherche de métal est effectuée dans une zone de végétation dense et broussailleuse.

Plus généralement, bien qu'étant apparemment la plus simple à mettre en oeuvre, l'utilisation de câbles électriques pour relier et faire communiquer des différents éléments du détecteur les uns avec les autres s'avère être génératrice d'inconvénients souvent non négligeables à l'usage.

Ainsi le câble reliant la tête de détection au boîtier de commande est un élément encombrant et fragile qui procure de multiples gênes durant l'utilisation, le repliement de la canne, le rangement de l'appareil et généralement lors des opérations de montage et de démontage.

De même, lorsque l'utilisateur souhaite changer de diamètre de disque de détection pour s'adapter au terrain ou aux cibles à détecter, celui-ci doit alors démonter le connecteur qui relie le câble au boîtier électronique de commande et dégrafer les liens qui maintiennent le câble à la canne support, ce qui est long et fastidieux.

De même encore, dans le cas du port du boîtier électronique à la ceinture ou en bandoulière, le câble reste pendant entre le haut de la canne télescopique, le long de laquelle il chemine jusqu'à la tête de détection et le boîtier qui n'est alors pas fixé à la canne. II peut donc s'accrocher à de multiples obstacles, rendant par exemple la recherche difficile en zone broussailleuse ou en forêt. En outre, lorsque l'utilisateur doit creuser le sol pour extraire une cible métallique, il est toujours relié à la canne par le câble ce qui le limite dans ses mouvements.

De même encore, les détecteurs étant par nature en perpétuels mouvements dans des conditions de plein air souvent difficiles, le câble et sa connectique sont soumis à rude épreuve et tombent régulièrement en panne, La réparation nécessite alors le retour en atelier. Pour limiter ces pannes on est en outre contraint d'utiliser des éléments de connectique particulièrement résistants, et donc coûteux, et de soigner particulièrement la mise en place de ces éléments de connexion lors de la fabrication du détecteur, ce qui engendre un coût en main d'oeuvre important dans la mesure où cette connectique soignée est montée de manière manuelle.

Enfin, il est à noter que, sur le plan électronique, le câble n'est pas un élément anodin. II peut même être un composant gênant dans la chaîne de traitement du signal de détection d'autant qu'il est le plus souvent connecté aux circuits oscillants d'émission et de réception. II peut alors se produire du bruit ou des couplages entre ces différents conducteurs. Le câble peut aussi, en tant qu'élément métallique, être détecté par la tête de détection, notamment s'il se trouve placé trop près de celle-ci. Ces problèmes rajoutent des contraintes que le fabriquant doit prendre en compte lors du développement.

Le brevet US N° 5 696 490 décrit un détecteur utilisant des fréquences très hautes (VHF) pour détecter le métal, et propose de résoudre les problèmes générés par le câble, en remplaçant la liaison filaire par une liaison sans fil par ondes infra rouges.

Cependant dans le détecteur présenté, le système de réception et d'affichage est décrit comme étant positionné au bas de la canne de détection, devant le disque, ce qui n'apporte aucun intérêt en terme de simplification ou d'intégration. De plus, dans le dispositif présenté, plusieurs fils de liaison sont néanmoins nécessaires pour relier entre autres les bobines au boîtier récepteur.

Le brevet US N° 5 138 262 décrit quant à lui, un système de logement batteries détachable et portable à la ceinture qui permet d'alléger le détecteur et de réduire l'effort de l'utilisateur. Cependant, même si ce système allège quelque peu la charge soutenue à bout de bras par l'utilisateur et facilite ainsi un peu le maniement du détecteur, l'utilisateur reste malgré tout, dans une telle configuration, relié et attaché au détecteur par un câble encombrant qui le limite dans ces mouvements notamment lorsqu'il doit se baisser pour creuser ou passer dans des zones broussailleuses.

Un but de l'invention est de résoudre les divers problèmes de fabrication, d'utilisation et de fiabilité du câble et de la connectique, généralement posés par les détecteurs de métaux présents sur le marché.

A cet effet l'invention a pour objet un détecteur de métaux portable, du type comportant:
- une canne support,
- une tête de détection placée à l'extrémité de la canne support, ladite comportant une bobine émettrice et une bobine réceptrice, la bobine émettrice étant alimentée par un signal d'excitation,
- un boîtier électronique de commande et de contrôle permettant de mettre en oeuvre la tête de détection, et d'exploiter les informations provenant de cette tête de détection
- un casque opérateur permettant au détecteur de transmettre à l'opérateur un signal audio de détection,

Ce détecteur a pour caractéristique avantageuse que la tête de détection comportant par ailleurs des moyens d'alimentation électrique et des moyens pour générer de manière autonome un signal d'excitation, la tête de détection et le boîtier électronique de commande et de contrôle comportent des moyens de transmission radio pour établir une liaison radio bidirectionnelle, ladite liaison permettant au boîtier de commande et de contrôle de commander la mise en oeuvre de la tête de détection et à la tête de détection de transmettre le signal de détection au boîtier de commande et de contrôle.

Le dispositif selon l'invention permet avantageusement de supprimer les inconvénients liés à la liaison filaire reliant principalement la tête de détection au boîtier de commande du détecteur.

Selon l'invention, les moyens d'alimentation électrique et des moyens pour générer de manière autonome un signal d'excitation sont agencés dans la tête de détection de façon à limiter les perturbations apportées au signal de réception.

Dans un mode préférentiel de réalisation, les différents éléments du dispositif selon l'invention, sont conçus pour fonctionner suivant deux modes de fonctionnement alternatifs:
- un mode de fonctionnement en configuration matérielle complète, avec boîtier de commande et de contrôle et casque opérateur, dans lequel la tête de détection est mise en oeuvre par l'intermédiaire du boîtier de commande et de contrôle.
- un mode de fonctionnement en configuration matérielle allégée, sans boîtier de commande et de contrôle, dans lequel la tête de détection est mise en oeuvre par l'intermédiaire du casque opérateur.

Dans ce mode de réalisation préférentiel, le casque opérateur comporte en outre des moyens de transmission radio pour établir une liaison bidirectionnelle avec le boîtier de commande et de contrôle d'une part et avec la tête de détection d'autre part.

Selon un mode particulier de mise en oeuvre, la commande du dispositif par l'opérateur au moyen du casque est activée lorsque le dispositif fonctionne en configuration allégée, par suite d'une action de l'opérateur.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:
- la figure 1, un détecteur de métaux selon l'art antérieur;
- la figure 2, des illustrations montrant un opérateur équipé d'un détecteur de métaux selon l'art antérieur;
- la figure 3, une représentation schématique du dispositif selon l'invention, dans sa configuration matérielle globale,
- la figure 4, un synoptique de principe des différentes fonctions mises en oeuvre par les différents éléments du dispositif selon l'invention;
- la figure 5, une représentation schématique du dispositif selon l'invention, dans une configuration matérielle simplifiée correspondant à un mode de fonctionnement alternatif à celui illustré par la figure 3;
- la figure 6, des illustrations relatives à la mise en oeuvre du dispositif selon l'invention.

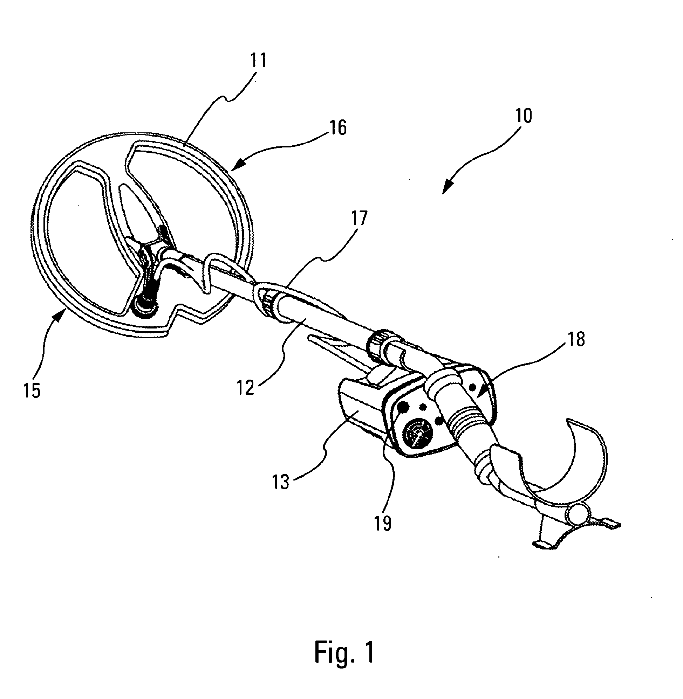

Comme il a été dit précédemment un détecteur de métaux 10 conventionnel comporte, comme l'illustre la figure 1 :
- une tête de détection 11;
- une canne support 12, généralement télescopique, de forme ergonomique;
- un boîtier de commande 13, généralement monté sur la tige support;
- un casque audio 14 pour l'opérateur (non représenté sur la figure).

Généralement, la tête de détection 11 ne comporte que peu d'éléments. On y trouve principalement une bobine d'émission 15, une bobine de réception 16, et quelques composants d'accord et/ou de mise en forme du signal. Les bobines sont disposées de façon à ce qu'en l'absence de métal, le champ à l'intérieur de la bobine de réception soit nul. Le signal d'excitation appliqué à la bobine d'émission, est produit par l'électronique située dans le boîtier de commande 13 par une liaison électrique filaire descendante qui relie le boîtier à la tête de détection. De même, le signal de détection produit par la bobine de réception est transmis au boîtier de commande par une liaison électrique filaire montante. Les deux liaisons filaires sont par ailleurs généralement logées dans un même câble de liaison 17, qui chemine le long de la canne support 12.

Le boîtier de commande 13 quant à lui comporte l'essentiel des organes de fonctionnement du détecteur. Il assure ainsi aussi bien la synthèse du signal d'excitation, que la réception et le traitement du signal de détection ou encore que la fourniture de l'énergie électrique de l'ensemble. II est également équipé de commutateurs et/ou d'interrupteurs, ainsi que de moyens de visualisation (voyants, vu-mètre, afficheur, buzzer ou haut-parleur) de façon à assurer également l'interface physique 18 avec l'utilisateur.

Le casque audio 14 est destiné à fournir à l'opérateur une information sonore caractérisant la détection d'un objet par le détecteur. Ce signal sonore est généralement synthétisé par le boîtier de commande à partir du signal de détection reçu de la tête de détection, au moyen d'un circuit d'interface audio. Le casque est pourvu d'un câble de raccordement qui vient se brancher sur une sortie audio 19 prévue à cet effet sur le boîtier de commande.

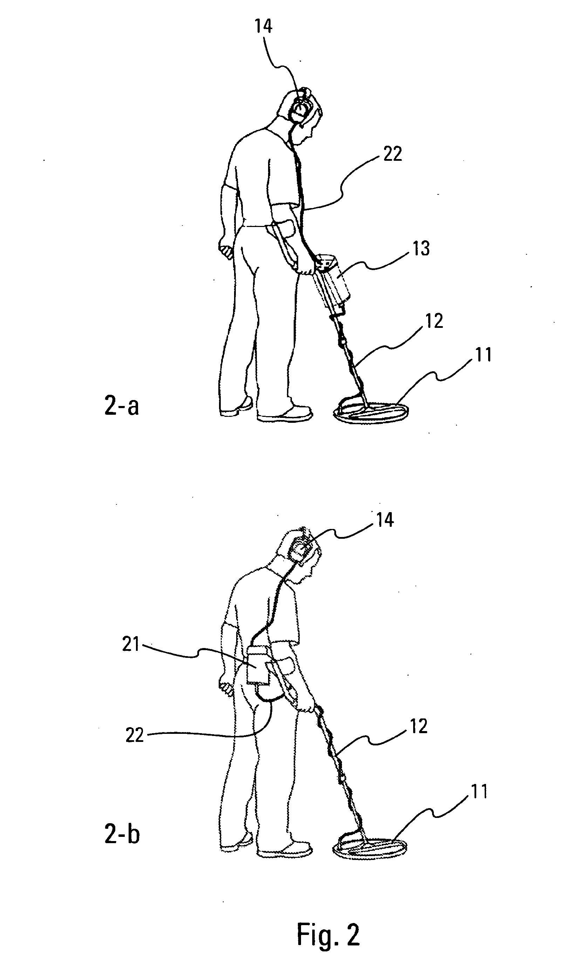

Dans un détecteur de métaux classique, le boîtier de commande représente le sous-ensemble central du dispositif. A ce titre il renferme l'essentiel des fonctions électroniques, les batteries d'alimentation électrique, et les fonctions d'interface avec l'opérateur. Les autres éléments, dépourvus de toute autonomie, lui sont ainsi nécessairement raccordés. Généralement positionné sur la canne support, comme l'illustre la figure 2-a, il peut cependant souvent être séparé de celle-ci pour faciliter la manipulation de cette dernière. Il est alors placé, comme l'illustre la figure 2-b, dans un réceptacle 21, sacoche ou autre, porté par l'opérateur. La liaison entre le boîtier et la tête de détection est alors réalisée au moyen d'un câble rallonge 22, pendant de manière suffisamment lâche pour permettre à l'opérateur de déplacer la canne 12 (et donc la tête de détection 11) sans entrave.

La nécessité de permettre le changement de tête de détection en fonction de la recherche effectuée, ainsi que de permettre le démontage du boîtier de commande conduit à réaliser des liaisons électriques amovibles. A cet effet le câble de liaison est généralement équipé à une de ses extrémités d'un connecteur permettant de le raccorder à l'embase correspondante du boîtier de commande 13. L'autre extrémité, reliée à la tête de détection, pénètre dans celle-ci par un passage étanche indémontable (presse étoupe).

Le câble étant ainsi solidaire de la tête de détection, la rupture du câble ou de l'un de ses conducteurs, au niveau de la partie inférieure de ce câble, nécessite généralement le remplacement de la tête de détection en entier, intervention malheureusement fréquente. Les moyens de connexion représentent en outre, dans bien des cas, les principaux éléments de fragilité du détecteur et sont une cause importante de non-fonctionnement. De plus, le câble lui-même étant, dans le cas du déport du boîtier de commande sur l'utilisateur, suffisamment lâche pour ne pas entraver le maniement de la tête de détection, celui-ci est également potentiellement sujet, dans de nombreuses circonstances, à des contraintes d'étirement voire d'arrachement.

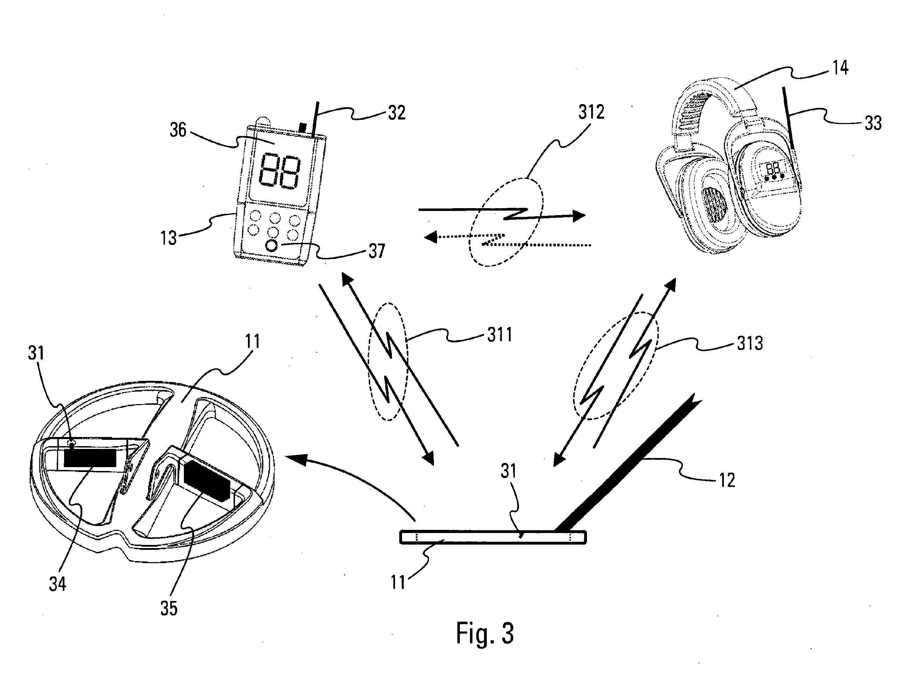

La structure et le principe de fonctionnement du détecteur de métaux selon l'invention permettent principalement de résoudre tous les problèmes liés à l'utilisation d'un câble électrique de liaison pour assurer les échanges nécessaires de signaux entre le boîtier de commande 13 qui porte l'interface utilisateur et la tête de détection 11. La figure 3 présente les différents éléments de cette structure de manière schématique.

Comme un détecteur de métaux classique, le détecteur de métaux selon l'invention comporte une tête de détection 11 placée à l'extrémité d'une canne support, un boîtier de commande 13 et de contrôle ainsi qu'un casque audio 14. Cependant, selon l'invention, les échanges de signaux entre la tête de détection 11 et le boîtier de commande et de contrôle 13 sont réalisés non pas par liaison filaire, mais par une liaison radio symbolisée par la flèche 311 sur la figure 3. A cet effet la tête de détection 11 et le boîtier de commande et de contrôle 13 sont pourvus des moyens d'émission-réception appropriés, symbolisés par les antennes 31, 32, antennes qui peuvent bien entendu être apparentes comme sur la figure, ou bien logées dans les différents éléments 11, 13 et 14 du détecteur. En outre, dans la mesure où le dispositif selon l'invention est équipé d'un casque audio comportant lui-même un émetteur-récepteur, symbolisé par l'antenne 33, les échanges de signaux et d'informations entre la tête de détection et le casque audio d'une part et entre le boîtier de commande et de contrôle et le casque audio d'autre part sont respectivement réalisés par des liaisons radio symbolisées par les flèches 312 et 313 sur la figure 3.

Selon l'invention, les liaisons radio 311, 312 et 313 sont définies de façon à assurer une transmission optimale en fonction du milieu de propagation considéré. Ainsi en milieu aquatique, une liaison radio basse fréquence pourra être employée alors que pour une application en milieu terrestre une bande de fréquence plus haute sera préférée. Par exemple pour des dispositifs destinés aux marchés européen et nord-américain, une fréquence de l'ordre de 2,4 GHz peut être utilisée, en raison de la disponibilité de la bande de fréquence concernée, de la présence sur le marché de composants d'émission-réception miniaturisés fonctionnant à cette fréquence et de la faible consommation électrique de ces composants.

Dans la configuration matérielle complète du dispositif correspondant à la figure 3, configuration qui comporte un casque audio 14 équipé d'un émetteur-récepteur, les moyens de communication radio de la tête de détection, du boîtier de commande et de contrôle et du casque audio sont conçus de façon à ce que la tête de détection 11 puisse échanger des signaux et des informations avec le boîtier de commande et de contrôle 13 (liaison 311) et échanger des signaux et des informations avec le casque audio 14 (liaison 313). En outre, ces moyens de communication permettent au boîtier de commande et de contrôle 13 d'échanger des signaux et des informations directement avec le casque audio 14 (liaison 312). Selon le mode de réalisation considéré, ces échanges peuvent être réalisés par des liaisons radio point à point, ou encore par multiplexage sur une liaison unique dont un des éléments assure la gestion. Le dispositif selon l'invention se présente alors comme un réseau de communications sans fil multipoints.

La substitution d'une liaison radio 311 à la liaison filaire reliant le boîtier de commande et de contrôle 13 à la tête de détection 11 induit de manière directe une modification sensible de la répartition physique des différents éléments fonctionnels. En effet pour répondre à des contraintes de consommation d'énergie, évidentes s'agissant d'un matériel portable, les moyens radio mis en oeuvre sont de faible puissance.
Par suite, la synthèse du signal d'excitation initialement réalisée dans le boîtier de commande est ici réalisée directement au niveau de la tête de détection 11, qui comporte notamment des moyens électroniques pour réaliser cette synthèse, ainsi qu'une source propre d'alimentation électrique (batteries). De la sorte, le boîtier de commande et de contrôle 13 ne transmet plus à la tête de détection 11 que des signaux de commande et de configuration qui sont réceptionnés et traités par un circuit électronique de gestion localisé également dans la tête de détection.
Inversement, la tête de détection 11 comporte également des moyens électroniques pour effectuer elle-même la réception du signal de détection.

Dans la configuration illustrée par la figure 3, ces moyens de réception intègrent des moyens de numérisation et de traitement du signal reçu, moyens également logés dans la tête de détection 11. Le signal de détection est alors traité et les informations obtenues par traitement transmises sous forme numérisée au boîtier de commande et de contrôle 13. Dans cette configuration la tête de détection produit elle-même le signal audio de détection qu'elle transmet au casque audio 14 par liaison radio.
Cependant, dans un mode de réalisation alternatif, les moyens de réception qui équipent la tête de détection effectuent simplement l'échantillonnage du signal reçu, la transposition de ce signal en fréquence radio et la transmission, sous forme analogique ou numérisée, du signal brut modulé vers le boîtier de commande et de contrôle 13 qui en assure alors le traitement. Le signal audio de détection est alors produit au niveau du boîtier de commande et de contrôle qui le transmet au casque audio 14.

Ainsi, dans le détecteur selon l'invention, les fonctions assurées par le boîtier de commande et de contrôle concernent principalement la collecte des informations et la gestion de l'interface utilisateur. A cet effet, il comporte des moyens de saisie et de visualisation permettant à l'opérateur à la fois de définir le mode de fonctionnement du détecteur et de prendre connaissance des informations tirées du signal reçu et transmises par la tête de détection. Ces moyens de saisie et de visualisation sont associés à un circuit électronique de traitement logé à l'intérieur du boîtier 13. Ces moyens sont par exemple constitués, comme l'illustre la figure 3, par un afficheur 36, graphique ou alphanumérique, associé à un clavier 37, l'ensemble ayant des dimensions appropriées pour être implanté sur une des faces du boîtier 13.
A ces fonctions d'interfaçage peuvent en outre s'ajouter, en cas d'utilisation d'une version simple de la tête de détection 11 tel que celle décrite précédemment, des fonctions de traitement du signal brut transmis par la tête de détection, fonctions qui permettent de produire une information pouvant être affichée sur l'écran de l'interface utilisateur, ainsi qu'un signal audio pour le casque 14.

Dans une variante encore plus élaborée du dispositif selon l'invention, la tête de détection peut comporter, outre les moyens de réception, des moyens permettant de contrôler localement son état de fonctionnement, à la mise sous tension (autotest), sur demande de l'opérateur (test off line), ou durant le fonctionnement (test on line) et l'état de charge des batteries qui fournissent l'alimentation électrique. Les résultats de contrôle sont transmis au boîtier de commande et de contrôle 13 par liaison radio (liaison 311) avec les informations de détection, extraites par traitement du signal reçu par la bobine de réception 16. Elles peuvent en outre être accompagnées d'une information permettant d'identifier le type de la tête de détection mise en oeuvre. Ces informations sont conditionnées de façon à pouvoir être affichées de manière permanente ou sur demande de l'opérateur.
De même le casque audio 14 peut comporter des moyens permettant de contrôler localement son état de fonctionnement, en particulier l'état de charge des batteries utilisées pour son alimentation propre. Les résultats du contrôle sont alors transmis, par liaison radio (liaison 312), au boîtier de commande et de contrôle 13 qui les conditionne pour affichage.

Pour intégrer les différents éléments nécessaires à son fonctionnement autonome, en particulier les éléments nécessaires à l'alimentation électrique (batteries), les moyens de synthèse du signal d'excitation de la bobine d'émission, les moyens de détection du signal reçu par la bobine de réception, ainsi que les moyens d'émission-réception radio, la tête de détection 11 présente certains aménagements de structure qui procurent des espaces de logement 34, 35 et dans lesquels ces différents éléments sont logés et agencés. L'agencement est réalisé de façon à limiter le plus possible les perturbations occasionnées aux champs respectivement émis et reçu par la bobine 15 et la bobine 16.

A cette fin le plan du circuit électronique est, par exemple, positionné de façon à être orienté à 90° du plan des bobines pour ne pas perturber le couplage électromagnétique entre la bobine émettrice et la bobine réceptrice.

De même, l'alimentation électrique est par exemple constituée par une batterie rechargeable miniature, de technologie Lithium, elle aussi insérée dans le disque de détection de façon à alimenter le circuit électronique. La batterie est choisie de faible épaisseur et est positionnée à 90° du plan des bobines pour ne pas perturber le couplage électromagnétique entre la bobine émettrice et la bobine réceptrice.

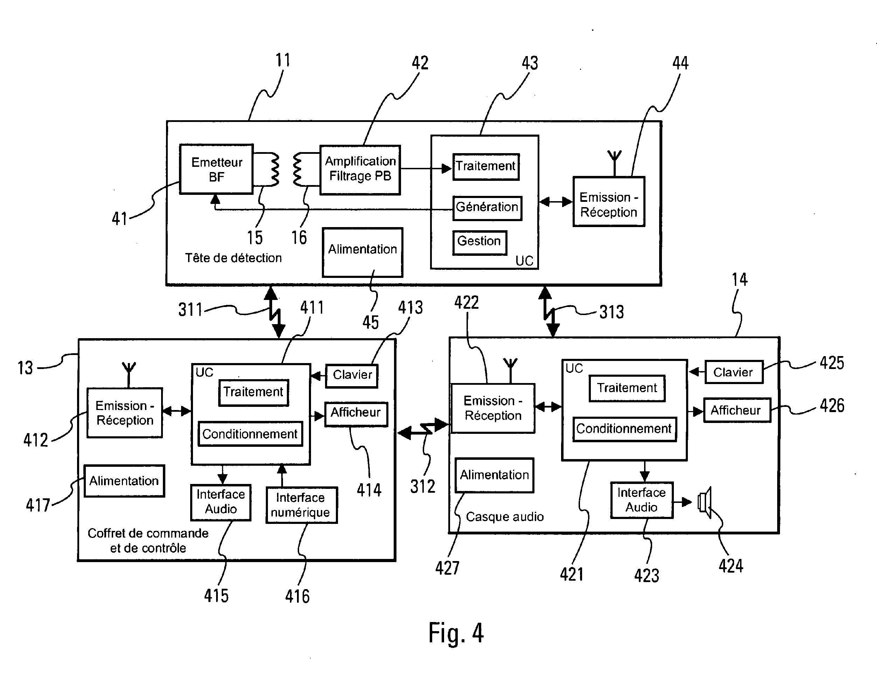

Pour mettre en oeuvre la structure décrite chacun des éléments actifs du dispositif selon l'invention (Tête de détection 11, boîtier de commande et de contrôle 13 et casque audio 14) comporte des moyens électroniques appropriés. Par suite le dispositif selon l'invention peut être illustré du point de vue fonctionnel par le schéma synoptique de la figure 4, schéma qui décrit le dispositif dans sa configuration matérielle complète, comme illustrée par la figure 3.

Comme l'illustre la figure 4, la tête de détection 11 comporte principalement:
- un étage émetteur Basse fréquence (BF) 41 qui fournit le signal d'excitation à la bobine émettrice 15,
- un étage d'amplification 42 qui amplifie le signal capté par la bobine réceptrice 16,
- une unité centrale 43,
- un module émetteur-récepteur 44
- des moyens d'alimentation 45.

La caractéristique originale principale de la tête de détection consiste en ce qu'elle intègre, outre des moyens 41 pour produire le signal d'excitation appliqué à la bobine émettrice 15 et des moyens 42 pour amplifier et démoduler le signal reçu par la bobine réceptrice 16, une unité centrale 43, un module émetteur-récepteur 44 et des moyens d'alimentation propres 45.

La commande du signal d'excitation de la bobine est ici synthétisée par l'unité centrale 43 et appliquée à l'étage d'émission basse fréquence 41 qui pilote la bobine émettrice 15. La forme du signal de commande appliqué est fonction du message de configuration transmis par le boîtier de commande et de contrôle 13 et reçu par l'unité centrale 43 via le module émetteur-récepteur 44.

L'unité centrale 43 effectue également la numérisation et le traitement du signal obtenu à la sortie de l'étage d'amplification et de filtrage 42. Elle transmet au boîtier de commande et de contrôle 13, via le module émetteur-récepteur 44 et la liaison 311, un ensemble de données, relatives notamment à l'amplitude du signal reçu et à sa phase par rapport à la référence que constitue le signal émis par la bobine émettrice 15.

L'unité centrale 43 effectue en outre la gestion générale des différents sous-ensembles électroniques contenus dans la tête de détection 11. A ce titre elle contrôle le bon fonctionnement des différents sous-ensembles, l'état de charge des batteries en particulier, et transmet une information d'état au boîtier de commande et de contrôle, via le module émetteur-récepteur 44 et la liaison 311.

Le boîtier de commande et de contrôle 13 renferme principalement les sous-ensembles nécessaires pour réaliser l'interface entre le détecteur et l'opérateur qui l'utilise. A cet effet il comporte notamment une alimentation autonome 417, ainsi qu'une unité centrale 411 reliée à un module émetteur-récepteur 412, à un clavier 413, à un afficheur 414 et à une interface audio 415. L'unité centrale 411 a pour fonction principale de réaliser l'interface entre l'opérateur et le détecteur. A cet effet elle effectue l'acquisition des commandes saisies par l'utilisateur par l'intermédiaire du clavier 413, en effectue le conditionnement et envoie les messages de commande correspondants à la tête de détection via le module émetteur-récepteur 412. Inversement l'unité centrale effectue l'acquisition des informations envoyées par la tête de détection, et les formate de façon à pouvoir les présenter sous la forme adéquate à l'affichage.

Associée à une interface audio 415, l'unité centrale 411 réalise également, à titre accessoire, la synthèse d'un signal audio de détection, signal qui peut être utilisé lorsque l'opérateur ne souhaite pas se servir d'un casque audio sans fil, mais plutôt d'un casque classique alimenté par une liaison filaire audio. A cet effet, le boîtier de commande et de contrôle 13 est pourvu d'une sortie audio de type haut-parleur, mais aussi d'une prise de sortie audio (non représentée sur les figures), sur laquelle l'opérateur peut raccorder la prise de son casque.

Associée à une interface numérique, un port d'entrée-sortie série par exemple, et à la connectique appropriée l'unité centrale 411 offre avantageusement la possibilité de réaliser le transfert de données vers des équipements déportés ou encore l'acquisition de données depuis ces équipements. En particulier, cette interface permet avantageusement de réaliser une mise à jour logiciel de la configuration du détecteur par simple téléchargement.

Enfin, comme l'unité centrale de la tête de détection 11, celle du boîtier de commande et de contrôle 13 réalise des fonctions de contrôle général et effectue en particulier le contrôle de bon fonctionnement des différents sous-ensembles qui équipent ce boîtier. Elle génère en outre une information d'état de fonctionnement qui est affichée sous la forme appropriée sur l'afficheur 414.

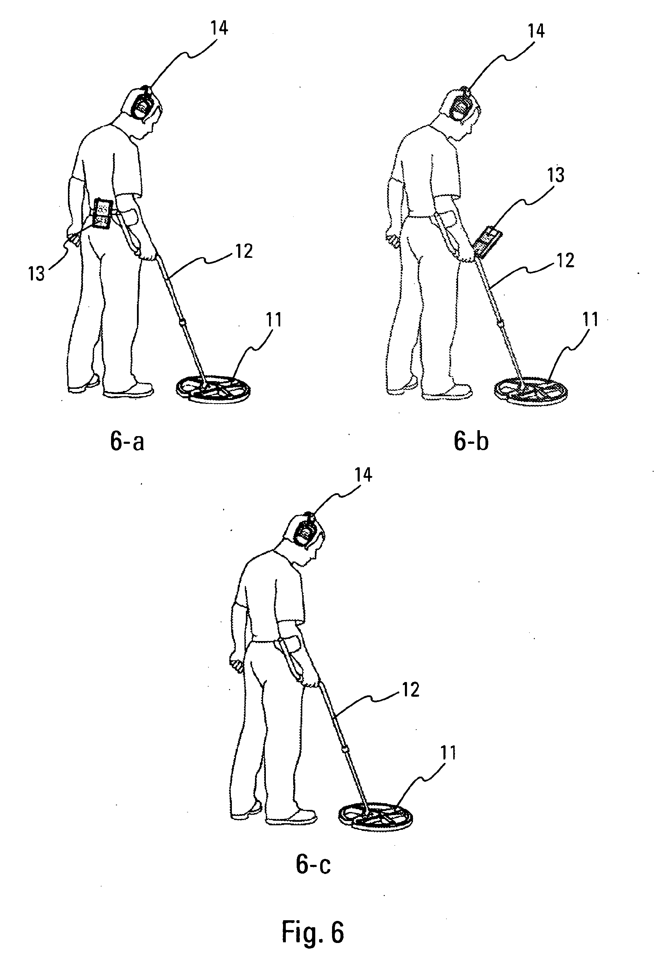

Comme l'illustre les représentations 6-a et 6-b de la figure 6, le boîtier 13 selon l'invention peut indifféremment être positionné sur la canne support 12 ou être porté en bandoulière par l'opérateur. La mise en oeuvre de liaisons radio entre le boîtier 13 et les autres éléments 11 et 14 du détecteur permet avantageusement de s'affranchir des contraintes liées à la mise en oeuvre de liaisons filaires.

Le casque opérateur 14, a pour principale caractéristique de comporter, outre des moyens de transmission radio 422, une unité centrale 421 qui associée à une interface utilisateur simplifiée, constituée d'un clavier 425 et d'un afficheur 426, miniaturisés, permet très avantageusement d'utiliser le détecteur de métaux selon l'invention dans une configuration simplifiée décrite dans la suite du document. Il comporte également des moyens d'alimentation autonomes 427 (batteries).

Dans la configuration matérielle complète, telle qu'illustrée par les figures 3 et 4, l'unité centrale du casque a pour rôle principal d'effectuer l'acquisition de l'information de détection transmise par la tête de détection 11 via la liaison radio 313 et le module émetteur-récepteur 422. Cette information est convertie par l'interface audio 423 en un signal analogique appliqué sur les écouteurs 424 du casque. L'unité centrale effectue également le contrôle de bon fonctionnement de chacun des sous-ensembles équipant le casque et transmet une information d'état de fonctionnement au module de commande et de contrôle 13, via le module émetteur-récepteur 422 et la liaison radio 312.

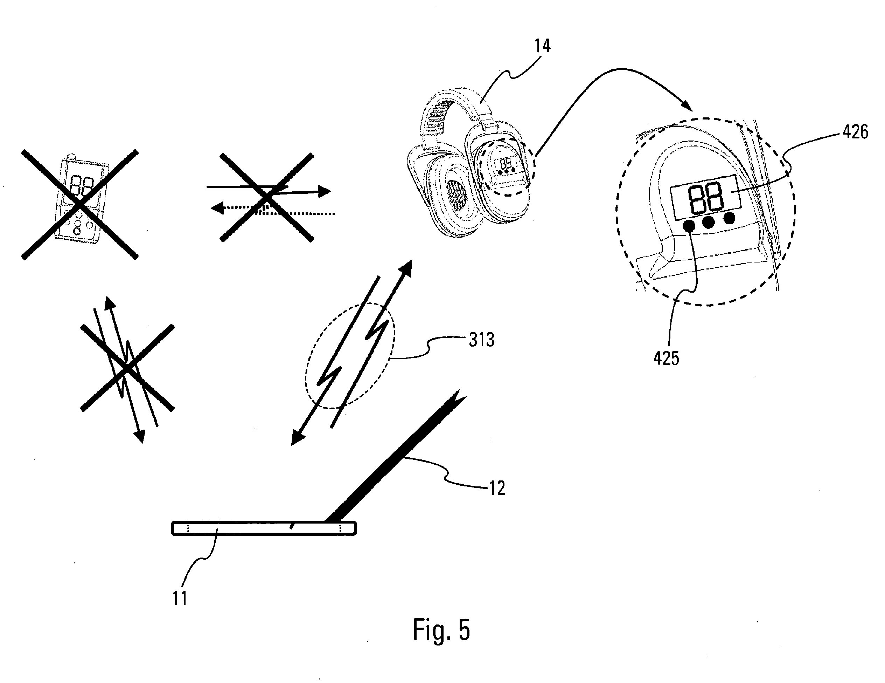

En parallèle de la configuration matérielle complète qui vient d'être décrite, configuration illustrée par les figures 3 et 4, l'architecture tant matérielle que fonctionnelle du détecteur de métaux selon l'invention permet avantageusement de mettre en oeuvre ce détecteur avec une configuration matérielle simplifiée, qui répond en particulier à certaines circonstances spécifiques dans lesquelles l'opérateur ne souhaite pas utiliser le boîtier de commande et de contrôle, par exemple pour ne pas exposer celui-ci à des dommages ou encore pour simplifier ou alléger la configuration quand cela lui semble nécessaire. Cette configuration simplifiée est illustrée par la figure 5 et l'illustration 6-c de la figure 6.

La mise en oeuvre d'une configuration simplifiée dans laquelle le boîtier de commande et de contrôle 13 est absent ou simplement mis hors service résulte en pratique d'un choix de l'opérateur. Cependant il est évidemment possible d'étendre la mis en oeuvre d'une telle configuration à des circonstances dans lesquelles le boîtier de commande et de contrôle étant tombé en panne, le détecteur continue à fonctionner sans celui-ci en passant automatiquement dans un mode de fonctionnement compatible d'une configuration matérielle simplifiée.

Avec une telle configuration matérielle tous les échanges de signaux et d'informations sont réalisés au moyen d'une seule liaison radio, la liaison 313, les autres liaisons (311 et 312) étant, de fait, inexistantes. Ainsi, la tête de détection 11 transmet au casque audio 14 non seulement l'information de détection nécessaire pour régénérer le signal audio appliqué aux écouteurs 424 du casque, mais aussi les informations relatives à la mesure de déphasage réalisée sur le signal reçu, ainsi que l'information sur l'état de fonctionnement de ses différents sous-ensembles. Inversement, le casque audio transmet à la tête de détection des commandes relatives au mode de fonctionnement imposé par l'opérateur. Il réalise en outre l'interface physique avec l'opérateur qui peut ainsi avantageusement visualiser un certain nombre d'informations sur l'écran miniature équipant le casque et transmettre un certain nombre de commandes au détecteur par l'intermédiaire du clavier miniature. Cependant, du fait de la petitesse des éléments d'interface, clavier et afficheur, le nombre d'informations consultables simultanément ainsi que le nombre de commande accessible par le clavier miniature est alors volontairement simplifié pour conserver une certaine ergonomie à l'équipement.

## Revendications

1. Détecteur de métaux portable du type comportant:
- une canne support (12),
- une tête de détection (11) placée à l'extrémité de la canne support (12), ladite comportant une bobine émettrice (15) et une bobine réceptrice (16), la bobine émettrice étant alimentée par un signal d'excitation,
- un boîtier électronique de commande et de contrôle (13) permettant de mettre en oeuvre la tête de détection (11),
- un casque opérateur (14) permettant au détecteur de transmettre à l'opérateur un signal audio de détection,
**caractérisé en ce que** la tête de détection (11) comportant en outre des moyens d'alimentation électrique, des moyens pour générer de manière autonome un signal d'excitation et des moyens d'analyse du signal reçu, la tête de détection (11) et le boîtier électronique de commande et de contrôle (13) comportent des moyens de transmission radio pour établir une liaison radio bidirectionnelle (311), ladite liaison permettant au boîtier de commande et de contrôle (13) de commander la mise en oeuvre de la tête de détection (11) et à la tête de détection de transmettre le signal de détection au boîtier de commande et de contrôle (13).

2. Dispositif selon la revendication 1, dans lequel les moyens d'alimentation électrique et les moyens pour générer de manière autonome un signal d'excitation sont agencés de façon à limiter le couplage électromagnétique induit par ces moyens entre la bobine émettrice et la bobine réceptrice.

3. Dispositif selon l'une de revendications 1 ou 2, dans lequel le casque opérateur (14) comporte des moyens de transmission radio pour établir une liaison bidirectionnelle (312) avec le boîtier de commande et de contrôle (13) d'une part et une liaison bidirectionnelle (313) avec la tête de détection d'autre part.

4. Dispositif selon la revendication 3, dans lequel le boîtier de commande et de contrôle (13), la tête de détection (11) et le casque opérateurs (14) sont configurés pour fonctionner suivant deux modes de fonctionnement alternatifs:
- un mode de fonctionnement en configuration allégée, sans boîtier de commande et de contrôle, dans lequel la tête de détection (11) est mise en oeuvre par l'intermédiaire du casque opérateur (14) et transmets à celui-ci le signal de détection;
- un mode de fonctionnement en configuration matérielle complète, avec boîtier de commande et de contrôle et casque audio dans lequel la tête de détection (11) est mise en oeuvre par l'intermédiaire du boîtier de commande et de contrôle (13), le signal de détection étant transmis au boîtier de commande et de contrôle (13) et au casque (14).

5. Dispositif selon la revendication 4, dans lequel le casque opérateur (14) comporte des moyens de commande et de contrôle simplifiés (425) ainsi que des moyens d'affichage (426), l'ensemble de ces moyens permettant à l'opérateur de mettre en oeuvre le dispositif seulement à l'aide du casque.

6. Dispositif selon la revendication 5, dans lequel la commande du dispositif par l'opérateur au moyen du casque est activée lorsque le dispositif fonctionne en configuration allégée, par suite d'une action de l'opérateur.

7. Dispositif selon l'une des revendications 4 à 6, pour lequel, dans le mode de fonctionnement en configuration matérielle complète, les moyens de liaison radio du casque opérateur (14), de la tête de détection (11) et du boîtier de commande et de contrôle (13) sont configurés pour établir d'une part une liaison bidirectionnelle (311) entre le boîtier de commande et de contrôle (13) et la tête (11), et d'autre part une liaison bidirectionnelle (312) entre le boîtier de commande et de contrôle (13) et le casque opérateur (14).

8. Dispositif selon l'une des revendications 4 à 6 pour lequel, dans le mode de fonctionnement en configuration matérielle complète, le casque opérateur (14) reçoit le signal de détection directement de la tête de détection (11) et des informations relatives au mode de fonctionnement du dispositif du boîtier de commande et de contrôle (13).

## Claims

1. Portable metal detector of the type comprising:
- a support stick (12),
- a detection head (11) placed at the end of the support stick (12), the said head comprising an emitting coil (15) and a receiving coil (16), the emitting coil being energized by an excitation signal,
- an electronic command and control box (13) making it possible to operate the detection head (11),
- an operator headset (14) allowing the detector to transmit an audio detection signal to the operator,
**characterized in that** the detection head (11), furthermore comprising power supply means, means for generating in an autonomous manner an excitation signal and means for analysing the signal received, the detection head (11) and the electronic command and control box (13), comprise radio transmission means for establishing a bidirectional radio link (311), the said link allowing the command and control box (13) to control the operation of the detection head (11) and allowing the detection head to transmit the detection signal to the command and control box (13).

2. Device according to Claim 1, in which the power supply means and the means for generating in an autonomous manner an excitation signal are arranged so as to limit the electromagnetic coupling induced by these means between the emitting coil and the receiving coil.

3. Device according to one of Claims 1 or 2, in which the operator headset (14) comprises radio transmission means for establishing a bidirectional link (312) with the command and control box (13) on the one hand and a bidirectional link (313) with the detection head on the other hand.

4. Device according to Claim 3, in which the command and control box (13), the detection head (11) and the operator headset (14) are configured to operate according to two alternative operating modes:
- an operating mode with lightweighted configuration, without command and control box, in which the detection head (11) is operated by way of the operator headset (14) and transmits the detection signal thereto;
- an operating mode with complete hardware configuration, with command and control box and audio headset, in which the detection head (11) is implemented by way of the command and control box (13), the detection signal being transmitted to the command and control box (13) and to the headset (14).

5. Device according to Claim 4, in which the operator headset (14) comprises simplified command and control means (425) as well as display means (426), together these means allowing the operator to operate the device solely with the aid of the headset.

6. Device according to Claim 5, in which the control of the device by the operator by means of the headset is activated when the device operates in the lightweighted configuration, as a consequence of an action of the operator.

7. Device according to one of Claims 4 to 6, for which, in the operating mode with complete hardware configuration, the radio link means for the operator headset (14), the detection head (11) and the command and control box (13) are configured to establish on the one hand a bidirectional link (311) between the command and control box (13) and the head (11), and on the other hand a bidirectional link (312) between the command and control box (13) and the operator headset (14).

8. Device according to one of Claims 4 to 6 for which, in the operating mode in complete hardware configuration, the operator headset (14) receives the detection signal directly from the detection head (11) and information relating to the operating mode of the device from the command and control box (13).

## Patentansprüche

1. Tragbarer Metalldetektor von dem Typ, der aufweist:
- ein Tragrohr (12),
- einen Detektionskopf (11), der am Ende des Tragrohrs (12) angeordnet ist, wobei der Kopf eine Sendespule (15) und eine Empfangsspule (16) aufweist, wobei die Sendespule mit einem Anregungssignal gespeist wird,
- ein elektronisches Steuer- und Überwachungsgerät (13), das es ermöglicht, den Detektionskopf (11) einzusetzen,
- einen Bediener-Kopfhörer (14), der es dem Detektor ermöglicht, an den Bediener ein Detektions-Tonsignal zu übertragen,
**dadurch gekennzeichnet, dass**, während der Detektionskopf (11) außerdem Stromversorgungseinrichtungen, Einrichtungen zur autonomen Erzeugung eines Anregungssignals und Einrichtungen zur Analyse des empfangenen Signals aufweist, der Detektionskopf (11) und das elektronische Steuer- und Überwachungsgerät (13) Funkübertragungseinrichtungen aufweisen, um eine Zweiweg-Funkverbindung (311) aufzubauen, wobei die Verbindung es dem Steuer- und Überwachungsgerät (13) erlaubt, den Einsatz des Detektionskopfs (11) zu befehlen, und es dem Detektionskopf erlaubt, das Detektionssignal an das Steuer- und Überwachungsgerät (13) zu übertragen.

2. Vorrichtung nach Anspruch 1, bei der die Stromversorgungseinrichtungen und die Einrichtungen zur autonomen Erzeugung eines Anregungssignals so eingerichtet sind, dass die von diesen Einrichtungen zwischen der Sendespule und der Empfangsspule induzierte elektromagnetische Kopplung begrenzt wird.

3. Vorrichtung nach Anspruch 1 oder 2, bei der le Bediener-Kopfhörer Einrichtungen zur Funkübertragung (14) aufweist, um eine Zweiweg-Verbindung (312) mit dem Steuer- und Überwachungsgerät (13) einerseits und eine Zweiweg-Verbindung (313) mit dem Detektionskopf andererseits aufzubauen.

4. Vorrichtung nach Anspruch 3, bei der das Steuer- und Überwachungsgerät (13), der Detektionskopf (11) und der Bediener-Kopfhörer (14) konfiguriert sind, um gemäß zwei alternativen Betriebsarten zu arbeiten:
- eine Betriebsart in der reduzierten Konfiguration, ohne Steuer- und Überwachungsgerät, bei der der Detektionskopf (11) mittels des Bediener-Kopfhörers (14) eingesetzt wird und an diesen das Detektionssignal überträgt;
- eine Betriebsart in der vollständigen Hardware-Konfiguration, mit Steuer- und Überwachungsgerät und Audio-Kopfhörer, bei der der Detektionskopf (11) mittels des Steuer- und Überwachungsgeräts (13) eingesetzt wird, wobei das Detektionssignal an das Steuer- und Überwachungsgerät (13) und an den Kopfhörer (14) übertragen wird.

5. Vorrichtung nach Anspruch 4, bei der der Bediener-Kopfhörer (14) vereinfachte Steuer- und Überwachungseinrichtungen (425) sowie Anzeigeeinrichtungen (426) aufweist, wobei die Gesamtheit dieser Einrichtungen es dem Bediener erlaubt, die Vorrichtung nur mit Hilfe des Kopfhörers einzusetzen.

6. Vorrichtung nach Anspruch 5, bei der die Steuerung der Vorrichtung durch den Bediener mittels des Kopfhörers, wenn die Vorrichtung in der reduzierten Konfiguration arbeitet, infolge einer Einwirkung durch den Bediener aktiviert wird.

7. Vorrichtung nach einem der Ansprüche 4 bis 6, bei der in der Betriebsart mit vollständiger Hardware-Konfiguration die Funkverbindungseinrichtungen des Bediener-Kopfhörers (14), des Detektionskopfs (11) und des Steuer- und Überwachungsgeräts (13) konfiguriert sind, um einerseits eine Zweiweg-Verbindung (311) zwischen dem Steuer- und Überwachungsgerät (13) und dem Kopf (11) und andererseits eine Zweiweg-Verbindung (312) zwischen dem Steuer- und Überwachungsgerät (13) und dem Bediener-Kopfhörer (14) aufzubauen.

8. Vorrichtung nach einem der Ansprüche 4 bis 6, bei der in der Betriebsart mit vollständiger Hardware-Konfiguration der Bediener-Kopfhörer (14) das Detektionssignal direkt vom Detektionskopf (11) und Informationen bezüglich der Betriebsart der Vorrichtung vom Steuer- und Überwachungsgerät (13) empfängt.
